# EUROPEAN PATENT APPLICATION

(11) **EP 2 199 463 A1**
(43) Date of publication of application: **23.06.2010**
(21) Application number: 08838255.1
(22) Date of filing: 14.10.2008
(51) Int. Cl.: D21H 19/20, C08F 220/56, D21H 19/82, D21H 21/16

(54) **SURFACE TREATMENT AGENT FOR PAPER**

(30) Priority: 12.10.2007 JP 2007267016
(71) Applicant: Kao Corporation, Chuo-Ku Tokyo 103-8210 (JP); Nippon Paper Industries Co., Ltd, Kita-ku Tokyo 114-0002 (JP)
(72) Inventor: MEIWA, Zenbei, Wakayama-shi Wakayama 640-8580 (JP); YABE, Kenichiro, Wakayama-shi Wakayama 640-8580 (JP); IKEDA, Yasushi, Wakayama-shi Wakayama 640-8580 (JP)
(74) Representative: Vossius & Partner
(86) International application number: PCT/JP2008/068924
(87) International publication number: WO 2009/048179

(57) **Abstract**

The present invention provides a surface treatment agent for paper such as a coating base paper. The surface treatment agent contains a cationic group-containing copolymer produced by polymerizing a specific vinyl monomer and a specific cationic group-containing vinyl monomer at a specific ratio.

## Description

### Field of the invention

The present invention relates to a surface treatment agent for paper, a coating base paper treated with the same, and a coated paper.

### Background of the invention

Recently, for reducing costs of transportation, delivery, and the like, there has been an extremely increasing demand for lighter-weight printing papers. However, simple weight reduction of a printing paper by reducing a basis weight reduces a thickness of the paper, resulting in booklets unfavorably slimmed. Needed weight reduction for printing paper is to reduce a weight of a paper while keeping high glossiness and a thickness of the coated paper. Aside from this demand, there has been an increasing demand for coated papers year after year, which have a smooth coated layer as an ink-receiving layer on the surface thereof compared with uncoated printing papers, because in recent printed matters, photographs, illustrations, and colors have been used in increasing amounts. A coated layer mainly composed of an inorganic pigment such as calcium carbonate and kaolin has a heavier specific gravity than that of a base paper mainly composed of a pulp and must be produced in as small an amount as possible to reduce a weight of a coated paper. However, a base paper having a reduced density has a lot of pores. In coating such a base paper, since a coating liquid rapidly penetrates thereinto, it is difficult to coat the surface of the base paper uniformly with a small amount of the coating liquid. A calendering treatment of a base paper before coating reduces pores in the base paper to thereby reduce penetration of a coating liquid into the base paper, but also reduces a thickness of the base paper to fail in producing a low-density paper. As described above, it is difficult to produce a lightweight coated paper having high glossiness from a lightweight bulky base paper by simply coating a coating liquid mainly composed of an inorganic pigment having a heavy specific gravity, because a large amount of the coating liquid is required due to penetration.

There is also a possible method for controlling penetration of a coating liquid into a base paper, including a method of sizing a base paper to reduce wettability of the base paper with water used as a solvent in the coating liquid. For example, JP-A11-012981 describes a treatment agent containing a cationic polyacrylamide and an anionic copolymer containing a monomer unit having a hydrophobic substituent.

JP-A2006-283236 describes a coating agent for converting paper containing a branched copolymerized polyacrylamide having a cationic group and/or an anionic group and a weight average molecular weight of 500,000 to 2,000,000.

JP-A6-200500 describes a method of applying an aqueous solution containing a swelling mica and a binder on a substrate for release paper to control penetration of a releasing agent such as silicone. JP-A2005-89871 proposes that application of a specific amount of a swelling mica on the surface of a lightweight bulky base paper for printing paper effectively prevents penetration of a hydrophilic coating agent.

### Summary of the invention

The present invention relates to a surface treatment agent for paper, containing a cationic group-containing copolymer produced by polymerizing (A) at least one selected from vinyl monomers represented by formulae (I) and (II) (hereinafter, referred to as component (A)) and (B) at least one selected from cationic group-containing vinyl monomers represented by formulae (III) and (IV) (hereinafter, referred to as component (B)) at a molar ratio of component (A)/component (B) of 97/3 to 30/70: 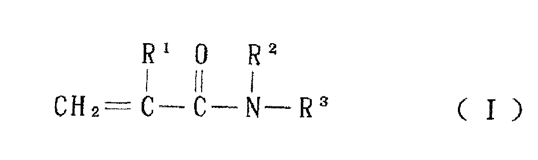 wherein, R¹ represents a hydrogen atom or a methyl group; and R² and R³, which may be the same as or different from each other, each represent a hydrogen atom or a linear or branched alkyl or alkenyl group having 1 to 4 carbon atoms; 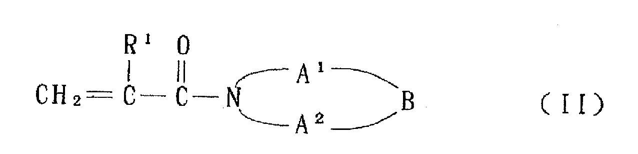 wherein, R¹ represents the same meaning as above; A¹ and A², which may be the same as or different from each other, each represent a group of a formula -(CH₂)ₙ- (n represents an integer of 2 to 6); and B represents a group of -O- or - CH₂-; 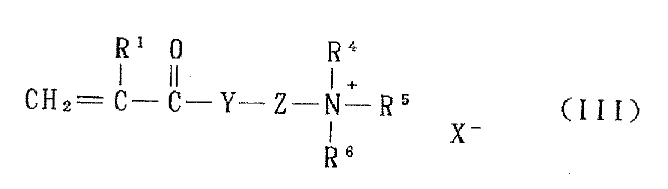 wherein, R¹ represents the same meaning as above; R⁴ and R⁵, which may be the same as or different from each other, each represent an alkyl or alkenyl group having 1 to 4 carbon atoms; R⁶ represents a hydrogen atom or an alkyl group having 1 to 4 carbon atoms; Y represents a group of -O-, - NH-, or -O-CH₂CH(OH)-; Z represents a linear or branched alkylene group having 1 to 4 carbon atoms; and, X represents a conjugate base of the acid, a halogen atom, or an alkylsulfate group having 1 to 4 carbon atoms; 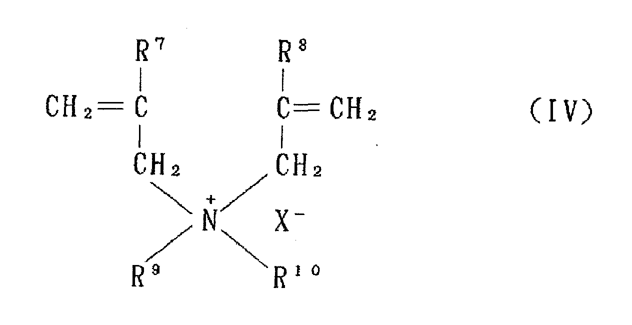 wherein, R⁷ and R⁸, which may be the same as or different from each other, each represent a hydrogen atom or a methyl group; R⁹ and R¹⁰, which may be the same as or different from each other, each represent a hydrogen atom or an alkyl group having 1 to 4 carbon atoms; and, X represents the same meaning as above.

The present invention also relates to a coating base paper produced by treating a sheet of paper, mainly containing pulp, with the surface treatment agent of the present invention at least on one side in an amount of 0.01 to 3.0 g/m² per side by dry weight.

The present invention also relates to a coated paper produced by coating the coating base paper of the present invention with a coating liquid, mainly containing a pigment and an adhesive, on the side treated with the surface treatment agent to form a coated layer thereon, wherein the coated paper has a density of not more than 1.5 g/cm³.

### Detailed description of the invention

The treatment agent of JP-A11-012981 has small effects on low-density base papers having many pores. There is also a possible treatment of applying a surface treatment agent mainly composed of a water-soluble polymer such as a coating starch and polyvinyl alcohol (PVA) on the surface of a paper to form a coating film thereon, thereby controlling penetration of a coating liquid applied thereafter. However, it is difficult to form an effective coating film on the surface for controlling penetration. JP-A2006-283236 increases rigidity of a converting paper used as a release paper. The converting paper is insufficient for being used as a base paper to produce a lightweight glossy coated paper suitable for printing. The aqueous solution used as a coating liquid for release paper in JP-A6-200500 is hydrophobic due to its main components of toluene and silicone, and has physical properties largely different from those of a hydrophilic coating liquid for printing paper produced by dispersing a pigment such as calcium carbonate and kaolin and a binder in water at high concentrations. JP-A6-200500 thus cannot solve the problem accompanying with common coated papers. JP-A2005-89871 has a disadvantage in that a swelling mica is very expensive and is not applicable to production of general-purpose printing papers. Therefore, it is very difficult to efficiently coat the surface of a lightweight base paper for printing with a coating liquid to form a coated layer while effectively controlling penetration of the coating liquid into the base paper using relatively cheap materials.

The present invention provides a surface treatment agent for paper such as a coating base paper for producing lightweight glossy coated papers.

The reason why the surface treatment agent of the present invention solves the problem when applied and dried on the surface of a base paper is not understood, but assumed that the presence of the cationic group-containing copolymer on the surface of the base paper causes partial aggregation of a coating liquid mainly composed of a pigment and an adhesive upon coating on the surface of the base paper to control penetration of the coating liquid mainly composed of the inorganic pigment into the base paper.

Since the highly hydrophilic, cationic group-containing copolymer, being present on the surface of the base paper, also causes an immediate absorption of water in the coating liquid, when the coating liquid mainly composed of a pigment and an adhesive is applied, it is assumed that the coating liquid will have an increased viscosity and non-fluidity to thereby control penetration of the coating liquid mainly composed of the inorganic pigment into the base paper.

It is also assumed that the cationic group-containing copolymer that is hydrophilic fills pores of a paper having a porous surface part in application on the surface of the paper to control penetration of the coating liquid into the base paper.

According to the present invention, provided is a surface treatment agent for paper that can suppress penetration of a coating liquid into a base paper to produce an effective coated layer with a reduced amount of the coating liquid using a common paper machine and/or a coater, and can efficiently produce a lightweight glossy coated paper. A coated paper produced from a coating base paper treated with the surface treatment agent for paper of the present invention is lightweight and has high glossiness.

### [Cationic group-containing copolymer]

The cationic group-containing copolymer according to the present invention is produced by copolymerizing (A) at least one vinyl monomer selected from those represented by formulae (I) and (II) and (B) at least one cationic group-containing vinyl monomer selected from those represented by formulae (III) and (IV) at a specified molar ratio.

### [Component (A)]

The cationic group-containing copolymer according to the present invention contains at least one monomer unit selected from vinyl monomers represented by formulae (I) and (II) as a constituent. 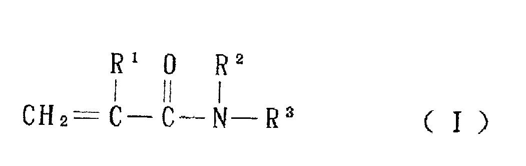 wherein, R¹ represents a hydrogen atom or a methyl group; R² and R³, which may be the same or different, each represent a hydrogen atom or a linear or branched alkyl or alkenyl group having 1 to 4 carbon atoms; and a total number of carbon atoms of R² and R³ is preferably not more than 6, and more preferably not more than 4. 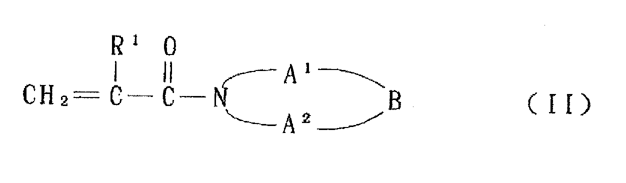 wherein, R¹ represents the same meaning as above; A¹ and A², which may be the same or different, each represent a group of a formula -(CH₂)ₙ- (n represents an integer of 2 to 6); and B represents a group of -O- or -CH₂-.

In the present invention, the monomer of the component (A) is preferably hydrophilic. As used herein, the "hydrophilic" means that a monomer providing a polymer unit has an inorganic/organic ratio (I/O) of not less than 0.60, preferably not less than 1.00, and even more preferably not less than 1.30 according to "Yuuki Gainenzu - Kiso to Ouyou - (The Organic Conceptual Diagram, its Fundamentals and Applications)", (Kouda Yoshio, Sankyo Publishing, May 10, 1984).

Examples of the vinyl monomer represented by formula (I) include (meth)acrylamide, N-methyl(meth)acrylamide, N,N-dimethyl(meth)acrylamide, N,N-diethyl(meth)acrylamide, N-n-propyl(meth)acrylamide, N-isopropyl(meth)acrylamide, N-t-butyl(meth)acrylamide, and N-isobutyl(meth)acrylamide. Examples of the vinyl monomer represented by formula (II) include N-(meth) acryloylmorpholine. The present invention is not limited to these examples. These vinyl monomers may be used alone or in combination. As used herein, the "(meth)acryl" refers to acryl and/or methacryl (the same is applied below).

Among these monomers of the component (A), preferred are (meth)acrylamide and N,N-disubstituted acrylamides. From the viewpoints of production of the cationic group-containing copolymer and handling of the surface treatment agent, more preferred are (meth)acrylamide, N,N-dimethyl(meth)acrylamide, and N,N-diethyl(meth)acrylamide.

### [Component (B)]

The cationic group-containing copolymer according to the present invention contains at least one monomer unit selected from cationic group-containing vinyl monomers represented by formulae (III) and (IV) as a constituent. 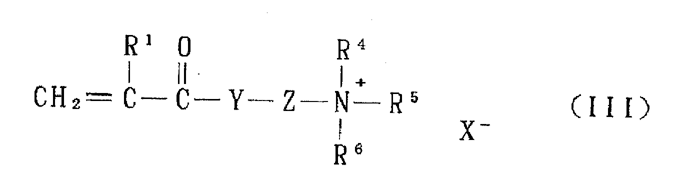 wherein, R¹ represents the same meaning as above; R⁴ and R⁵, which may be the same or different, each represent an alkyl or alkenyl group having 1 to 4 carbon atoms; R⁶ represents a hydrogen atom or an alkyl group having 1 to 4 carbon atoms; Y represents a group of -O-, -NH-, or -O-CH₂CH(OH)-; Z represents a linear or branched alkylene group having 1 to 4 carbon atoms; and, X represents a conjugate base of the acid, a halogen atom, or an alkylsulfate group having 1 to 4 carbon atoms. 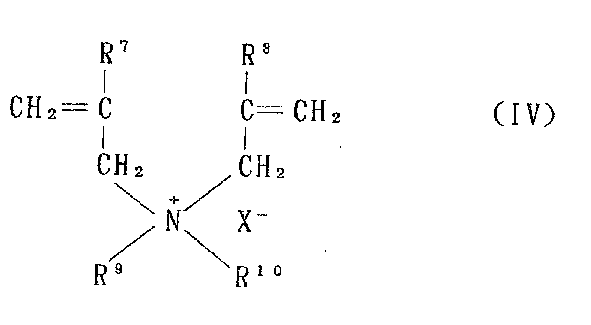 wherein, R⁷ and R⁸, which may be the same or different, each represent a hydrogen atom or a methyl group; R⁹ and R¹⁰, which may be the same or different, each represent a hydrogen atom or an alkyl group having 1 to 4 carbon atoms; and, X represents the same meaning as above.

Specific examples of the compound represented by formula (III) include acid-neutralized products and quaternary ammonium salts of (meth)acrylates and (meth)acrylamides having a dialkylamino group shown above. Specific examples of the compound represented by formula (IV) include diallyl quaternary ammonium salts shown above.

Examples of a preferred acid for producing the acid-neutralized product include hydrochloric acid, sulfuric acid, nitric acid, acetic acid, formic acid, maleic acid, fumaric acid, citric acid, tartaric acid, adipic acid, sulfamic acid, toluenesulfonic acid, lactic acid, pyrrolidone-2-carboxylic acid, and succinic acid. Examples of a preferred quaternizing agent for producing the quaternary ammonium salt include alkyl halides such as methyl chloride, ethyl chloride, methyl bromide, and methyl iodide and usual alkylating agents such as dimethyl sulfate, diethyl sulfate, and di-n-propyl sulfate.

Among compounds represented by formulae (III) and (IV), more preferred are quaternary ammonium salts of dimethylaminoethyl (meth)acrylate, diethylaminoethyl (meth)acrylate, dimethylaminopropyl (meth)acrylamide, and diethylaminopropyl (meth)acrylamide produced by the quaternizing agent and dimethyl diallyl ammonium chloride.

Specific examples of the cationic group-containing vinyl monomer include acid-neutralized products and quaternary ammonium salts of (meth)acrylate monomers having a dialkylamino group such as dimethylaminoethyl (meth)acrylate, diethylaminoethyl (meth)acrylate, dipropylaminoethyl (meth)acrylate, diisopropylaminoethyl (meth)acrylate, dibutylaminoethyl (meth)acrylate, diisobutylaminoethyl (meth)acrylate, di-t-butylaminoethyl (meth)acrylate, dimethylaminopropyl(meth)acrylamide, diethylaminopropyl(meth)acrylamide, dipropylaminopropyl(meth)acrylamide, diisopropylaminopropyl(meth)acrylamide, dibutylaminopropyl(meth)acrylamide, diisobutylaminopropyl(meth)acrylamide, and di-t-butylaminopropyl(meth)acrylamide and monomers having an amino group such as (meth)acrylamide; diallyl quaternary ammonium salts such as dimethyl diallyl ammonium chloride and diethyl diallyl ammonium chloride; N-vinyl heterocyclic compounds such as 4-vinylpyridine, 2-vinylpyridine, and N-vinylimidazole; acid-neutralized products and quaternary ammonium salts of vinyl ether monomers having an amino group such as aminoethyl vinyl ether and dimethylaminoethyl vinyl ether. As used herein, the "(meth)acrylate" refers to acrylate and/or methacrylate (the same is applied below).

### [Composition ratio of monomer component]

The cationic group-containing copolymer according to the present invention have a ratio (molar ratio) of the component (A) to the component (B), represented by component (A)/component (B), of 97/3 to 30/70, and preferably 97/3 to 40/60. The effect of suppressing the coating liquid from penetrating into the paper is exhibited within the composition ratio range, when the coating liquid mainly composed of a pigment and an adhesive is applied on the paper, because part of the coating liquid aggregates and the copolymer immediately absorbs water of the coating liquid. In addition, the copolymer produced from monomers mixed at a composition ratio within the range can increase adhesion power to the surface of a paper and sufficiently suppress reduction of peeling strength between a base paper and a coated layer.

The cationic group-containing copolymer according to the present invention have a total amount of the components (A) and (B) in constituent monomer units of preferably 80 to 100% by mol, and more preferably 90 to 99.9% by mol.

### [Component (C)]

The cationic group-containing copolymer according to the present invention may contain a cross-linking vinyl monomer unit (excluding a monomer represented by formula (IV)) as a constituent, component (C), according to need. The cross-linking vinyl monomer has preferably at least two groups selected from vinyl groups, acryloyl group, methacryloyl group and allyl group in a molecule. Examples of the cross-linking vinyl monomer having at least two vinyl groups in a molecule include esters of (meth)acrylic acid with polyhydric alcohols such as ethylene glycol di(meth)acrylate, diethylene glycol di(meth)acrylate, polyethylene glycol di(meth)acrylate, propylene glycol di(meth)acrylate, dipropylene glycol di(meth)acrylate, polypropylene glycol di(meth)acrylate, 1,2-butylene glycol di(meth)acrylate, 1,3-butylene glycol di(meth)acrylate, neopentyl glycol di(meth)acrylate, glycerol di(meth)acrylate, glycerol tri(meth)acrylate, trimethylolpropane tri(meth)acrylate, and pentaerythritol tetra(meth)acrylate; acrylamides such as N-methylallylacrylamide, N-vinylacrylamide, N,N'-methylenebis(meth)acrylamide, and bisacrylamideacetic acid; divinyl compounds such as divinylbenzene, divinyl ether, and divinylethyleneurea; polyallyl compounds such as diallyl phthalate, diallyl maleate, diallylamine, triallylamine, triallylammonium salts, allyl-etherified pentaerythritol, and allyl-etherified sucrose having at least two allyl ether units in a molecule; esters of (meth)acrylic acid with unsaturated alcohols such as vinyl (meth)acrylate, allyl (meth)acrylate, and 2-hydroxy-3-acryloyloxypropyl (meth)acrylate.

Among these cross-linking vinyl monomers, preferred are ethylene glycol di(meth)acrylate, polyethylene glycol di(meth)acrylate, divinylbenzene, pentaerythritol triallyl ether, and pentaerythritol tetraallyl ether.

In the cationic group-containing copolymers according to the present invention, a percentage of the cross-linking vinyl monomer of the component (C) in the total amount of the components (A), (B), and (C) is preferably 0.0005 to 5% by mol, and more preferably 0.001 to 1% by mol. In other words, component (C)/[component (A)+component (B)+component (C)]×100 (% by mol) is preferably 0.0005 to 5% by mol, and more preferably 0.001 to 1% by mol. In the case a percentage of the cross-linking vinyl monomer is not less than 0.0005% by mol, the resultant cationic group-containing copolymer has an adequate degree of cross-linking and remains on the surface of paper in an increased amount, difficultly penetrating into the paper in application. The effect to prevent a coating liquid from penetrating into the paper is thereby sufficiently achieved because part of a coating liquid aggregates in application; a coating liquid, mainly composed of a pigment and an adhesive, becomes viscous and not flowable in application through an immediate absorption of water in the coating liquid by the cationic group-containing copolymer being present on the surface of the paper, and the cationic group-containing copolymer, applied on the surface of the paper, fills pores of the paper having a porous surface part. Not more than 5% by mol is preferable because the coating liquid is suppressed from penetrating into the paper from the viewpoint of results that the cationic group-containing copolymer, applied on a paper, keeps the ability of absorbing water in a coating liquid applied thereon, and accordingly retains the effects that the coating liquid has an increased viscosity and is non-flowable. When the component (C) is used, in production of the cationic group-containing copolymer according to the present invention, a total amount of the components (A), (B), and (C) in constituent monomers is preferably 90 to 100% by mol, and more preferably 95 to 100% by mol.

### [Other monomer component]

For the cationic group-containing copolymer according to the present invention, the at least two vinyl monomers described above are used as essential constituents, and the cross-linking vinyl monomer is preferably further used as a constituent. Other vinyl monomer that can copolymerize these vinyl monomers may also be used as a constituent.

Examples of the other vinyl monomer include (meth)acrylate derivatives such as methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, n-pentyl (meth)acrylate, neopentyl (meth)acrylate, cyclopentyl (meth)acrylate, n-hexyl (meth)acrylate, cyclohexyl (meth)acrylate, n-octyl (meth)acrylate, isooctyl (meth)acrylate, 2-ethylhexyl (meth)acrylate, n-decyl (meth)acrylate, isodecyl (meth)acrylate, lauryl (meth)acrylate, tridecyl (meth)acrylate, stearyl (meth)acrylate, isostearyl (meth)acrylate, behenyl (meth)acrylate, phenyl (meth)acrylate, toluyl (meth)acrylate, xylyl (meth)acrylate, benzyl (meth)acrylate, 2-ethoxyethyl (meth)acrylate, 2-butoxyethyl (meth)acrylate, 2-phenoxy (meth)acrylate, 2-methoxypropyl (meth)acrylate, 3-methoxypropyl (meth)acrylate, 2-ethoxypropyl (meth)acrylate, 3-ethoxypropyl (meth)acrylate, ethylene glycol mono(meth)acrylate, diethylene glycol mono(meth)acrylate, triethylene glycol mono(meth)acrylate, tetraethylene glycol mono(meth)acrylate, polyethylene glycol #210 mono(meth)acrylate, polyethylene glycol #400 mono(meth)acrylate, polyethylene glycol #600 mono(meth)acrylate, polyethylene glycol #1000 mono(meth)acrylate, methoxyethylene glycol (meth)acrylate, methoxydiethylene glycol (meth)acrylate, methoxytriethylene glycol (meth)acrylate, methoxytetraethylene glycol (meth)acrylate, methoxypolyethylene glycol #210 (meth)acrylate, methoxypolyethylene glycol #400 (meth)acrylate, methoxypolyethylene glycol #600 (meth)acrylate, and methoxypolyethylene glycol #1000 (meth)acrylate (the number following # refers to a weight average molecular weight); anionic group-containing monomers such as 2-acrylamide-2-methylpropanesulfonic acid, sodium styrenesulfonate, acrylic acid, methacrylic acid, 2-sulfoethyl methacrylate; and betaines such as N-(3-sulfopropyl)-N-acryloyloxyethyl-N,N-dimethylammonium betaine, N-(3-sulfopropyl)-N-methacryloylamidopropyl-N,N-dimethylammonium betaine, N-(3-carboxymethyl)-N-methacryloylamidopropyl-N,N-dimethylammonium betaine, N-(3-sulfopropyl)-N-methacryloyloxyethyl-N,N-dimethylammonium betaine, and N-carboxymethyl-N-methacryloyloxyethyl-N,N-dimethylammonium betaine.

### [Method of polymerization]

A method for producing the cationic group-containing copolymer according to the present invention is not specifically limited, but generally preferably by aqueous solution polymerization, reverse phase suspension polymerization, precipitation polymerization, or the like. For example, the aqueous solution polymerization includes uniformly dissolving monomer components and a cross-linking agent in water, a hydrophilic organic solvent miscible with water, or a mixed solvent thereof, substituting an inner atmosphere of a reaction system with an inert gas such as nitrogen and carbon dioxide to remove dissolved oxygen off, and adding a polymerization initiator to react. A temperature of starting polymerization is generally about 20 to 90°C. A reaction time is about 1 to 10 hours. When a monomer component used is hardly soluble in water, a hydrophilic organic solvent is preferably used together.

Typical examples of the hydrophilic organic solvent include lower alcohols such as methyl alcohol, ethyl alcohol, and propyl alcohol; cyclic ethers such as tetrahydrofuran and dioxane; and others such as acetone, acetonitrile, dimethylformamide, dimethylacetamide, and dimethylsulfoxide. Among these solvents, particularly preferred are tetrahydrofuran, acetonitrile, dimethylformamide, dimethylacetamide, and dimethylsulfoxide.

For the polymerization initiator, peroxides, organic and inorganic peracids and salts thereof, azobis compounds, which are uniformly soluble in the solvent, are used alone or in combination with reducing agents to construct a redox system. Typical examples of the polymerization initiator include t-butyl peroxide, t-amyl peroxide, cumyl peroxide, acetyl peroxide, propionyl peroxide, benzoyl peroxide, benzoyl isobutyryl peroxide, lauroyl peroxide, t-butyl hydroperoxide, cyclohexyl hydroperoxide, tetralin hydroperoxide, t-butyl peracetate, t-butyl perbenzoate, bis(2-ethylhexyl peroxydicarbonate), 2,2'-azobisisobutyronitrile, phenylazotriphenylmethane, 2,2'-azobis(2-amidinopropane) dihydrochloride, 2,2'-azobis[2-(5-methyl-2-imidazolin-2-yl)propane] dihydrochloride, 2,2'-azobis[2-(2-imidazolin-2-yl)propane] dihydrochloride, sodium persulfate, potassium persulfate, ammonium persulfate, hydrogen peroxide, and combination use of persulfates with tertiary amines such as triethylamine, triethanolamine, and dimethylaniline.

Among them, particularly preferred are t-butyl peroxide, benzoyl peroxide, 2,2'-azobisisobutyronitrile, 2,2'-azobis(2-amidinopropane) dihydrochloride, 2,2'-azobis[2-(5-methyl-2-imidazolin-2-yl)propane] dihydrochloride, 2,2'-azobis[2-(2-imidazolin-2-yl)propane] dihydrochloride, sodium persulfate, potassium persulfate, and ammonium persulfate alone or combination of these persulfates with tertiary amines such as triethylamine, triethanolamine, and dimethylaniline.

For producing the copolymer of the present invention, any polymerization apparatus can be used without specific limitation, including common kneaders and cylinder reactors.

For example, the aqueous solution polymerization for producing the copolymer of the present invention includes placing an aqueous solution of 10 to 50% by weight of monomer mixture in a kneader having a cap, substituting an inner atmosphere of a reaction system with an inert gas such as nitrogen according to need, adding a water-soluble radical polymerization initiator to initiate polymerization at 20 to 90°C, and breaking down a water-containing polymer gel generated with progress of polymerization by shearing force of a rotating blade of the kneader to complete polymerization. The scope of the present invention, of course, should not be limited to this example. An initial concentration of the aqueous solution of the monomer mixture used in this example is preferably 10 to 50% by weight.

An amount of the polymerization initiator used is within the range of 0.01 to 5% by mol, preferably 0.01 to 3% by mol, and more preferably 0.01 to 1% by mol, based on monomer components. When the amount of the polymerization initiator used is not more than 5% by mol based on monomer components, a degree of polymerization of main polymer chain is increased and a percentage of main polymer chain not cross-linked is decreased, resulting in a polymer sufficiently exhibiting expected performances such as water absorbing capacity and thickening action. When not less than 0.01% by mol, a reaction rate of polymerization is favorably increased to decrease an amount of unreacted monomer.

The reaction product is in the state of gel containing the solvent used in the reaction, and is generally broken with a rotary cutter or the like, dried by heating, at a reduced pressure or the like, to remove the solvent, pulverized, and sifted to give a powder.

Aqueous solution polymerization with a general hermetic cylindrical reactor may also be employed. This method also includes feeding or adding dropwise an aqueous solution of 10 to 50% by weight of a monomer mixture in the reactor, substituting an inner atmosphere of the reaction system with an inert gas such as nitrogen according to need, and adding a water-soluble radical polymerization initiator to initiate polymerization at an ambient temperature or an elevated temperature of 30 to 80°C by heating to give a copolymer in the liquid state.

The reverse phase suspension polymerization includes dissolving monomer components and a cross-linking agent in water uniformly, and suspending or emulsifying the solution in an organic solvent that is not miscible with water using a dispersant and the like to polymerize. The polymerization initiator is not necessarily water-soluble. Those soluble in organic solvents can also be used. Examples of the organic solvent used include those described above, hydrocarbon organic solvents such as hexane, cyclohexane, heptane, octane, benzene, toluene, xylene, and ethylbenzene, halogenated hydrocarbon organic solvents such as carbon tetrachloride and dichloroethane, and mineral oils such as isober.

Examples of the dispersant include sorbitan monostearate, sorbitan monopalmitate, polyvinyl alcohol, methyl cellulose, ethyl cellulose, hydroxymethyl cellulose, hydroxyethyl cellulose, carboxymethyl cellulose, carboxyethyl cellulose, sugar esters, and surfactants generally used in an emulsifying dispersant.

Removal of dissolved oxygen in the reaction system, treatments of the reaction product, and the like are performed in the same way as described above. Reaction conditions are not specifically limited, but generally as follows: an amount of the solvent used is equal to 20 times to that of the aqueous solution of the monomer mixture, and preferably equal to 10 times; an amount of the polymerization initiator used is 0.01 to 5% by mol, and preferably 0.01 to 3% by mol based on the monomer components; a temperature of polymerization initiation is about 10 to 90°C; and a reaction time is about 1 to 10 hours.

The cationic group-containing copolymer according to the present invention preferably has properties such that 1% by weight aqueous solution thereof preferably has a viscosity of not less than 5 mPa·s, more preferably not less than 10 mPa·s, and even more preferably not less than 15 mPa·s. Ten % by weight aqueous solution thereof preferably has a viscosity of not less than 500 mPa·s, more preferably not less than 1000 mPa·s, and even more preferably not less than 3000 mPa·s. These viscosities are measured with a B viscometer at 60 rpm of rotation number of a rotor 30 minutes or longer after the 1% by weight and the 10% by weight aqueous solutions are placed in a thermostat bath set to 25°C.

The copolymer according to the present invention preferably has no stringiness in the state of 1% by weight aqueous solution, and more preferably in the state of 10% by weight aqueous solution.

The cationic group-containing copolymer according to the present invention can be produced in a state of solution, powder, block, or dispersion. In a preferred aspect, the surface treatment agent for paper of the present invention is an aqueous solution or an aqueous dispersion containing the cationic group-containing copolymer according to the present invention in an amount of 0.1 to 30% by weight, more preferably 0.5 to 20% by weight, and even more preferably 0.8 to 10% by weight.

In the present invention, any method can be used for treating the surface of a paper such as a prepared base paper and a coating base paper with the surface treatment agent containing the cationic group-containing copolymer without specific limitation. For treatment, application is preferred.

A paper to be treated with the surface treatment agent of the present invention is mainly composed of pulp, and preferably has a density of 0.30 to 1.00 g/cm³, and more preferably 0.35 to 0.85 g/cm³. A paper having a density of not less than 0.30 g/cm³ can prevent reduction of paper strength and decrease frequency of web break in coating, resulting in stable processing. A paper having a density of not more than 1.00 g/cm³ is adequately treated with the surface treatment agent of the present invention at the surface thereof, and has an appropriate air-permeating resistance to give good blister resistance in offset printing, resulting in a coated paper for printing without limitation in use.

For a pulp used in a base paper, any pulp derived from vegetable fibers such as wood and plant fibers can be used, including bleached chemical pulps such as NBKP and LBKP, mechanical pulps such as TMP, CTMP, GP, and RGP and bleached products thereof, high-yield pulps such as SCP and CGP and bleached products thereof, and recycled pulps such as waste pulp and de-inked waste pulp (DIP) and bleached product thereof (BDIP).

Additives generally used in papermaking may be added according to need, including a filler, a paper strength improver, a sizing agent, a yield improver, an improver for water leak properties, and a bulking agent. Examples of the sizing agent include alkyl ketene dimer, alkenyl succinic anhydride, and neutral rosin sizing agents. Examples of the filler include calcium carbonate.

In the present invention, an amount of the surface treatment agent used (e.g., an amount applied) is, based on dry weight, preferably 0.01 to 3.0 g/m², more preferably 0.02 to 2.0 g/m², even more preferably 0.03 to 1.0 g/m², and even more preferably 0.1 to 1.0 g/m² per side of a base paper. When the amount is not less than 0.01 g/m², the effect of preventing penetration of a coating liquid is achieved. Not more than 3.0 g/m² corresponds to the total amount of not more than 6 g/m² used (e.g., applied) on both sides and then a lightweight paper is produced.

A means for a treatment with the surface treatment agent can be appropriately selected from any known means. Preferably used are a 2-roll size press coater, a blade metered size press, a rod metered size press, a curtain coater, a dye coater, a gravure coater, a kiss coater, a bar coater, a roll coater, a pond size press, a gate roll coater, a spray coater, and a Sym-Sizer.

The surface treatment agent can be applied on the surface of a paper by any method. In general, an aqueous solution or dispersion containing the cationic group-containing copolymer according to the present invention is used. In this case, for a solvent or a dispersing medium, used are water and organic solvents, and particularly preferred is water.

To prepare an aqueous solution or a dispersion, the cationic group-containing copolymer according to the present invention in a state of powder or block produced by copolymerization is pulverized, by grinding or the like, into particles having an average particle diameter of not more than 1 mm, preferably not more than 300 µm, and even more preferably not more than 50 µm, and the particles of the copolymer are mixed with a solvent or a dispersing medium. Particles of the copolymer having an average particle diameter of not less than 1 mm unfavorably take a time to dissolve or disperse. The cationic group-containing copolymer produced in a state of solution or dispersion is used as it is or diluted.

The present invention relates to the surface treatment agent for paper containing a specific cationic group-containing copolymer, and to the coated paper produced by providing a layer of a coating liquid, mainly composed of a pigment and an adhesive, on the surface of a coating base paper treated with the cationic group-containing copolymer, that is, a coated paper produced by coating the coating base paper of the present invention with a coating liquid, mainly composed of a pigment and an adhesive, on the side treated with the surface treatment agent to form a coated layer thereon, wherein the coated paper has a density of not more than 1.5 g/cm³.

For the pigment and the adhesive used in a coating liquid to form a coated layer, those generally used for coated paper can be used. Examples of the pigment include inorganic pigments such as kaolin, clay, calcium carbonate, and titanium dioxide, and organic pigments such as plastic pigment. Examples of the adhesive include copolymer latices conventionally used for coated paper such as styrene/butadiene, styrene/acryl, ethylene/vinyl acetate, butadiene/methyl methacrylate, and vinyl acetate/butyl acrylate copolymer latices, and starches such as oxidized starch, cationic starch, phosphate-modified starch, urea phosphate-modified starch, etherified starches (e.g., hydroxyethyl ether-modified starch), and dextrin. These adhesives may be used in the range of from 5 to 50% by weight, and more preferably 10 to 30% by weight with respect to 100% by weight of the pigment. Other auxiliary agents generally used such as a dispersant, a thickener, a water retention agent, a defoaming agent, and a waterproofing agent are used according to need.

For coating a coating liquid, known means can be used, including a blade coater, an air-knife coater, a gate roll coater, a blade metered size press, a rod metered size press, a curtain coater, a dye coater, a blade coater, a roll coater, a pond size press, and a gate roll coater, for example.

A thickness of the coated layer is not specifically limited, and determined according to an intended use and quality of the coated paper. From the viewpoint of producing a glossy paper, an amount of the coating liquid coated (based on solid content) is preferably not less than 6 g/m², more preferably 6 to 25 g/m², and even more preferably 7 to 20 g/m² per side.

Examples of a means for drying include a steam heater, a hot-air heater, an infrared heater, a gas heater, and a cylinder drier. A smoothing treatment using a super calender, soft calender, or the like, is performed according to need.

To achieve the effects of the invention at higher degree, a density of the coated paper is preferably not more than 1.5 g/cm³, and more preferably 0.40 to 1.40 g/cm³.

A paper produced from a base paper treated with the surface treatment agent of the present invention is applicable to high quality paper for printing, medium quality paper for printing, newsprint paper, gravure printing paper, PPC paper, form paper, ink-jet printing paper, and base paper for paperboard, and also applicable to various coated papers such as art paper, cast coated paper, medium quality coated paper, high quality coated paper, cast coated paper, A0 art paper, A1 art paper, A2 coated paper, A3 coated paper, and heat-transfer paper. Among these papers, coated papers for printing that are required to increase surface glossiness are effective applications.

### Brief description of the drawing

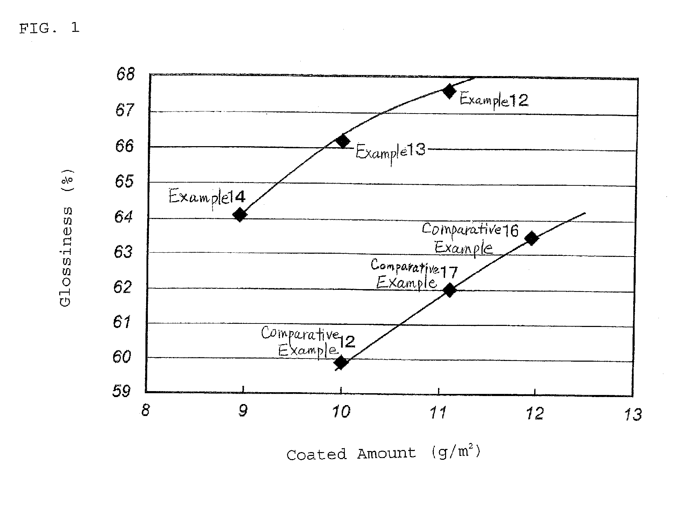

FIG. 1 is a graph showing a relationship between an amount coated and a glossiness based on results in Table 4.

### Examples

The following Examples demonstrate the present invention. Examples are intended to illustrate the present invention and not to limit the present invention.

In the following description, the "part(s)" and "%" for amounts used always refer to "part(s) by weight based on solid content" and "% by weight based on solid content".

### [Method for producing a cationic group-containing copolymer]

Cationic group-containing copolymers were produced from monomers shown in Table 1 according to the following method.

### <Production Example 1 of a cationic group-containing copolymer>

In a 1L beaker, 267.4 g of ion-exchanged water, 185.63 g (effective amount; 148.50 g) of MOEDES (equimolar adduct of dimethylaminoethyl methacrylate and dimethylsulfuric acid, effective content was 80% by weight, both were reagents, Wako Pure Chemical Industries, Ltd.), 110.46 g of DMAAm (N,N-dimethylacrylamide, reagent, Wako Pure Chemical Industries, Ltd.), 0.415 g of NK-14G (cross-linking agent, polyethylene glycol dimethacrylate, Shin Nakamura Chemical Co., Ltd.), and 0.952 g of V-50 (polymerization initiator, 2,2'-azobis(2-amidinopropane) dihydrochloride, Wako Pure Chemical Industries, Ltd.) were mixed to give an aqueous monomer solution A. In a 5 L glass container, 1648 g of cyclohexane and 1.94 g of sugar ester S-770 (Mitsubishi Chemical Corporation) as a dispersant were treated for one hour at 60°C to dissolve uniformly, and cooled to 30°C to give a dispersant solution B.

The aqueous monomer solution A was added to the dispersant solution B. A mixture was stirred for four minutes at a rotation number of 9000 with a homomixer (ROBOMICS, Primix Corporation) to give a monomer dispersion having an average particle diameter of 5 µm. The whole dispersion was placed in a 5 L SUS tank equipped with a stirrer, a thermometer, and a condenser. An inner atmosphere of the reaction system was replaced with nitrogen. The dispersion was heated to 55°C and polymerized for one hour at the temperature. The dispersion was aged for one hour at 70°C. Then, a dehydrator having a condenser was installed to the reaction system to remove 269 g of water over about two hours. With progress of dehydration, an inside temperature of the tank rose from 70°C to 90°C.

The reaction system was cooled to 40°C or lower, and the reaction mixture was transferred to a stainless tray. The mixture was dried at 80°C by hot-air blowing to remove the solvent and give a cationic group-containing copolymer 1 as a white granule. The cationic group-containing copolymer 1 was shortly milled for about one second with a household coffee mill to give a powder of the cationic group-containing copolymer 1 having an average particle diameter of 4.0 µm to be used in Examples.

### <Production Examples 2 and 3 of cationic group-containing copolymers>

Cationic group-containing copolymers 2 (average particle diameter: 3.8 µm) and 3 (average particle diameter: 5.1 µm) were prepared with monomer compositions shown in Table 1 according to Production Example 1 of the cationic group-containing copolymer 1.

### <Production Example 4 of a cationic group-containing copolymer>

In a stainless steel kneader of an inner volume 1 L having a jacket in which oil of 70°C was externally circulated and two sigma shaped stirring arms, an aqueous monomer solution, which was composed of 45.92 g (solid content: 29.85 g) of DADMAC (diallyldimethylammonium chloride, 65% in water, Daiso Co., Ltd.), 48.28 g of acrylamide (AAm, reagent, Wako Pure Chemical Industries, Ltd.), 0.0214 g of NK-14G (cross-linking agent, polyethylene glycol dimethacrylate, Shin Nakamura Chemical Co., Ltd.), and 350 g of ion-exchanged water and was previously blown with nitrogen, was placed. The reaction system was blown with a nitrogen gas for 20 to 40 minutes to replace an inner atmosphere with nitrogen and the monomer solution was heated. To the reaction mixture was added 0.22 g of V-50 as a polymerization initiator. After 15 minutes after the addition of the polymerization initiator, the mixture increased its viscosity, and one hour later the whole mixture became a soft gel. Polymerization was continued for additional four hours at the state. A clot-like polymerization product was taken off, dried at 95°C, pulverized with a coffee mill and a jet mill, and classified with Hi-Bolter to give a cationic group-containing copolymer 4 (average particle diameter: 45 µm)

### <Production Example 5 of a cationic group-containing copolymer>

In a 1 L glass container equipped with a stirrer, a thermometer, and a condenser, 155.38 g of ion-exchanged water was placed. An inner atmosphere of the glass container was replaced with nitrogen and heated to 70°C. In an another 500 mL beaker, 53.33 g of 78% QDM (quaternary compound of dimethylaminoethyl methacrylate with methyl chloride) Mitsubishi Rayon Co., Ltd.), 56.81 g of AAm (acrylamide, reagent, Wako Pure Chemical Industries, Ltd.), 0.1541 g of MBAAm (methylenebisacrylamide, reagent, Wako Pure Chemical Industries, Ltd.), and 49.38 g of ion-exchanged water were mixed to give a solution. To the glass container was added the solution dropwise over one hour. To the glass container was simultaneously added dropwise a solution of 1.38 g of V-50 in 59.57 g of ion-exchanged water from other port. A mixture was aged for additional 6 hours at 70°C, and cooled to a room temperature to give an aqueous solution of a cationic group-containing copolymer 5 in an effective concentration of 24.4%.

### <Production Example 6 of a cationic group-containing copolymer>

An aqueous solution of a cationic group-containing copolymer 6 was prepared in the same way as Production Example 5, except that 56.88 g of AAm was used instead of 56.81 g and a cross-linking agent MBAAm (methylenebisacrylamide) was not added. The resultant aqueous solution of a cationic group-containing copolymer 6 had an effective concentration of 24.2%.

### <Production Examples 7 and 8 of cationic group-containing copolymers>

Cationic group-containing copolymers 7 (average particle diameter: 3.8 µm) and 8 (average particle diameter: 4.3 µm) were prepared with monomer compositions shown in Table 1 according to Production Example 1 for the cationic group-containing copolymer 1.

### <Production Examples 9 to 12 of cationic group-containing copolymers (comparative copolymers)>

Comparative cationic group-containing copolymers 9 (average particle diameter: 5.2 µm), 10 (average particle diameter: 5.2 µm), 11 (average particle diameter: 5.5 µm), and 12 (average particle diameter: 4.5 µm) were prepared with monomer compositions shown in Table 1 according to Production Example 1 for the cationic group-containing copolymer 1.

### <Production Example 13 of cationized starch>

In a 5 L glass container equipped with a stirrer, a thermometer, and a condenser, to 995 g of 85% isopropyl alcohol were added 44.4 g of 20% sodium hydroxide, 243 g of ion-exchanged water, and 1000 g of cornstarch (Sanwa Cornstarch Co., Ltd.) with stirring to disperse at a room temperature. To a mixture was added 245.7 g of aqueous solution of glycidyltrimethylammonium chloride, which was previously prepared by adding 95.7 g of 20% sodium hydroxide dropwise to 150 g of HAC-65 (Toho Chemical Industry Co., Ltd.) and stirring for 10 minutes, dropwise. An inner atmosphere of the reaction system was replaced with nitrogen and heated to 50°C. Cationization progressed for 10 hours. To the reaction mixture was added 21.3 g of 35% hydrochloric acid to neutralize, and additional 23.2 g of 35% hydrochloric acid to cause a cutting reaction for 10 hours at 40°C. The reaction mixture was conditioned to pH 6 with 276 g of 3% sodium hydroxide, cooled, and filtered through a Nutsche. To a filter residue was added 1000 g of isopropyl alcohol and stirred at room temperature for extraction. The extraction and filtration were repeated five times. A collected extract was dried under reduced pressure at 50°C to give 1000 g of cationized starch. N% (Kjeldahl method) was 0.60%, and a viscosity of 5% aqueous solution (at. 50°C) was 50 mPa·s.

### [Preparation of base paper]

### (1) Base paper 1 (in Tables, referred to as hand-made paper)

### <Starting pulp>

A virgin pulp, LBKP (leaf bleached kraft pulp), was used as a starting pulp. It was disintegrated and beaten with a beater at 25°C to give an LBKP slurry of a pulp concentration of 2.2% by weight. The slurry had a Canadian standard freeness (JIS P 8121) of 450 ml.

### <Method of papermaking>

The virgin pulp slurry in such amount as that a pulp sheet made therefrom had a pulp basis weight of 80 g/m² ± 1 g/m² was used to perform papermaking on a 80-mesh wire (area: 625 cm²) with a square Tappi paper machine to give a pulp sheet of 3.5 kg/cm². The sheet was pressed for five minutes with a press machine and dried for two minutes at 105°C with a mirror-finished drier. The dried pulp sheet was conditioned for its humidity for one day under the conditions of 23°C and a humidity of 50% to give a base paper to be subjected to a surface treatment. The base paper thus prepared had a bulk density of 0.574 g/cm³.

### (2) Base paper 2 (in Tables, referred to as base paper)

A practical machine-made paper (basis weight: 43 g/m² ± 1 g/m²) was used as a base paper to be subjected to a surface treatment. The paper had a bulk density of 0.750 g/cm³.

### (3) Base paper 3 (in Tables, referred to as additive-containing hand-made paper)

The virgin pulp slurry was similarly subjected to papermaking as for the base paper 1, except that an internal additive was added to the slurry, to give an additive-containing hand-made paper (basis weight: 80 g/m² ± 1 g/m²) to be subjected to a surface treatment. The base paper thus prepared had a bulk density of 0.574 g/cm³.

### [Treatment with surface treatment agent]

### (1) Method 1

An aqueous solution of a given concentration of a surface treatment agent as shown in Tables was spread over a glass plate with a wire coater to form a cast film of 50 g/m² on the glass plate. The base paper (width: 12.5 cm, length: 25 cm) prepared above was placed on the cast film, and covered with a filter paper of 100 g/m². A roll (diameter: 200 mm, width: 200 mm, line pressure 230 g/cm) was rolled over the paper to transfer (apply) the surface treatment agent from the glass plate to the surface of the base paper. The paper was then dried for two minutes at 105°C with a mirror-finished drier. These operations were quickly performed in no time between operations. The dried pulp sheet was conditioned for its humidity for one day under the conditions of 23°C and 50% humidity to give a coating base paper. A concentration of the aqueous solution or the like was adjusted such that an amount applied (based on solid content) was a value shown in Tables.

### (2) Method 2

Using a gate roll coater (PM-9002GC, treating rate: 300 m/min, SMT Co., Ltd.), an aqueous solution of a given concentration of a surface treatment agent as shown in Table was applied on the surface of the base paper (practical machine-made paper), and dried for 20 seconds at 105°C with a mirror-finished drier. The dried pulp sheet was conditioned for its humidity for one day under the conditions of 23°C and 50% humidity to give a coating base paper. A concentration of the aqueous solution or the like was adjusted such that an amount applied (based on solid content) was a value shown in Tables.

Surface treatment agents used in Comparative Examples were as follows.
Ace A: oxidized starch, Oji Cornstarch Co., Ltd.
cato308: cationized starch, paper strengthening/paper quality-improving agent, Nippon NSC Ltd.
GL-05: partially saponified polyvinyl alcohol, Nippon Synthetic Chemical Industry Co., Ltd.
WS-4020: polyamide-epichlorohydrin resin, effective content: 25%, Seiko PMC Corporation
coating agent (1%): prepared by diluting the coating liquid for the coated paper used below (effective concentration: 65%) with water to an effective concentration of 1%
Polymaron 482S: olefin resin, surface sizing agent, effective content: 25%, Arakawa Chemical Industries, Ltd.

### [Preparation of coated paper]

A coating base paper (surface-treated paper) prepared above was coated with a coating liquid at one side using a blade coater (flexible trailing blade coater, coating rate: 140 m/min, coating pressure: 0.5 to 1.5 kg/cm², Kumagai Riki Kogyo Co., Ltd.), and dried for 20 seconds at 105°C with a mirror-finished drier.

The coating liquid used was prepared by mixing 50g of calcium carbonate (FMT97, Fimatec, Ltd.) and 50 g of fine kaolin (Amazon Plus, manufactured by Kadam (A Caemi Company)), adding 0.2 g of sodium polyacrylate (Poiz 535M, Kao Corporation) and 0.2 g of 2N caustic soda as dispersants to disperse, and adding 11g of latex (NP200B, JSR Corporation) and 3.5g of modified starch (phosphate-modified starch, Oji Cornstarch Co., Ltd.) as adhesives per 100 g of pigment. It had an effective concentration of 65%.

The coated base paper was further treated with two nipping rolls of a test super calender (Kumagai Riki Kogyo Co., Ltd.) under the conditions of a line pressure of 200 kg/cm, (pressure of 49 MPa), a treating rate of 10 m/min, a roll temperature of 50°C to give a coated paper.

In Example 10, a base paper was subjected to the surface treatment and coated at both sides, and treated with two nipping rolls of a test super calender under the conditions of a line pressure of 200 kg/cm, (pressure of 49 MPa), a treating rate of 10 m/min, a roll temperature of 50°C to give a coated paper.

### [Evaluation of coated paper]

### <Amount of a surface treatment agent applied>

A coating base paper (surface-treated paper) produced by the surface treatment with the surface treatment agent and a base paper before the surface treatment were conditioned for their humidity for one day under the conditions of 23°C and 50% humidity. A weight difference therebetween was divided by an area of the sample (width: 12.5 cm, length: 25 cm) to give a value (g/m²). An amount applied was an average value calculated from three samples measured. For a base paper not treated with the surface treatment agent was considered as having an amount applied of 0 g/m².

### <Amount of a coating liquid coated>

A coated paper prepared by the method described above was cut into a sample of 12.0 cm by 24 cm. The sample and a coating base paper (surface-treated paper) (width: 12.5 cm, length: 25 cm) produced by the surface treatment with the surface treatment agent were conditioned for their humidity for one day under the conditions of 23°C and 50% humidity, and determined for their basis weights. A value of (basis weight of the coated paper - basis weight of the surface-treated paper) was determined for three samples and used to calculate an amount coated (g/m²) on an average.

### <Glossiness>

In accordance with JIS P8142, a paper was measured for white paper glossiness at a coated side with a gloss meter (model: GMX-203, for 75°, Murakami Color Research Laboratory Co., Ltd.). The white paper glossiness of the paper was an average value of 18 measurement points (6 points per sheet, three sheets were used). The higher the white paper glossiness, the glossier the paper. 1% (1 point) difference in glossiness is sufficiently discerned as a significant difference. 3% (3 points) difference is more significantly discerned.

### <Bulk density>

In accordance with JIS P8118, a paper was measured for consistency to determine a bulk density. A bulk density was an average value calculated from three samples measured. The lower the bulk density, the more lightweight the paper. 0.02 of difference in bulk density is sufficiently discerned as a significant difference.

### <Z-axis peeling strength>

In accordance with JIS P8139, a paper was measured for peeling strength with an internal bonding tester (Kumagai Riki Kogyo Co., Ltd.). A Z-axis peeling strength was an average value of measurement points (5 points per sheet, two sheets used). The larger the value, the higher the peeling strength.

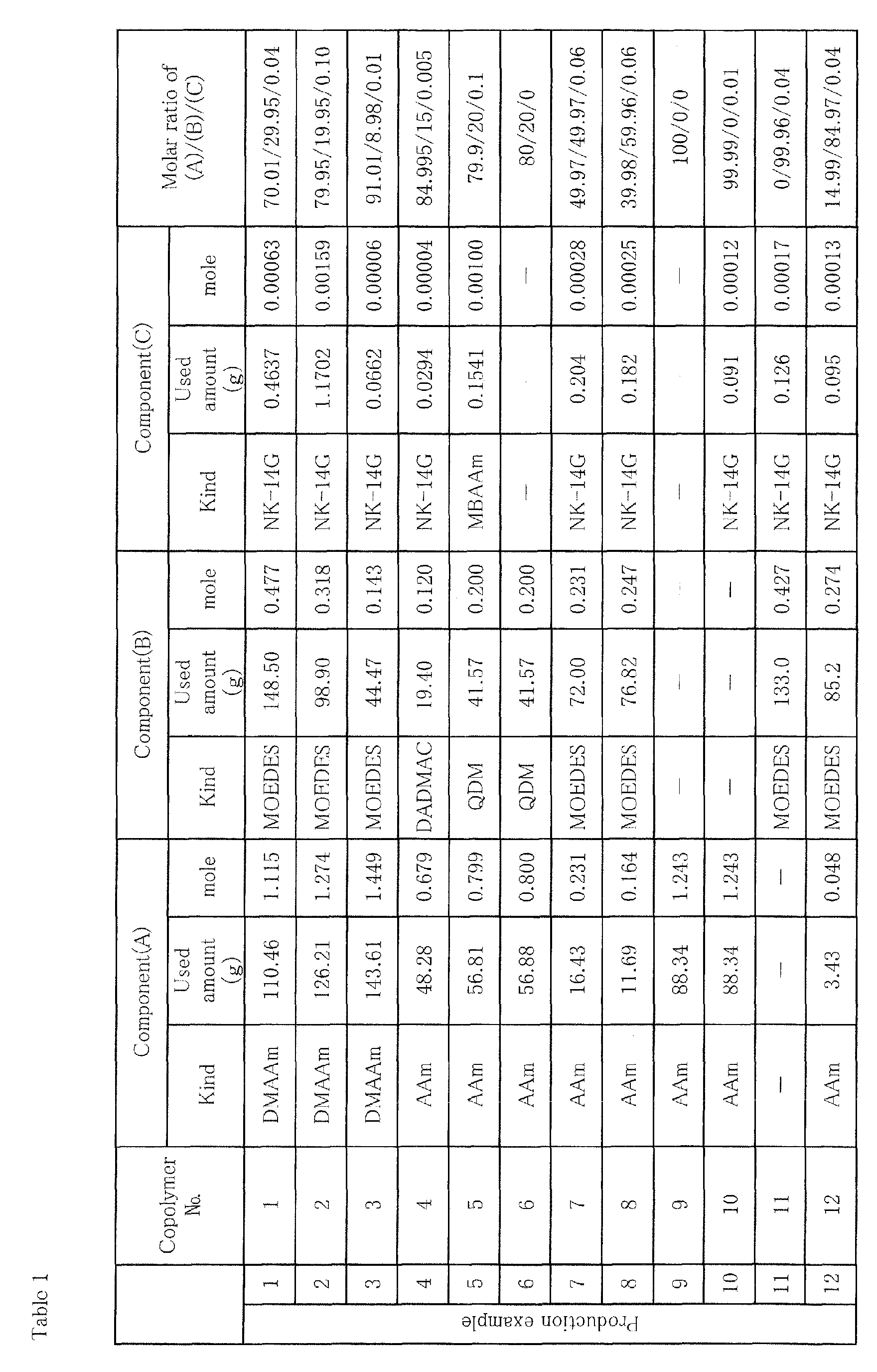

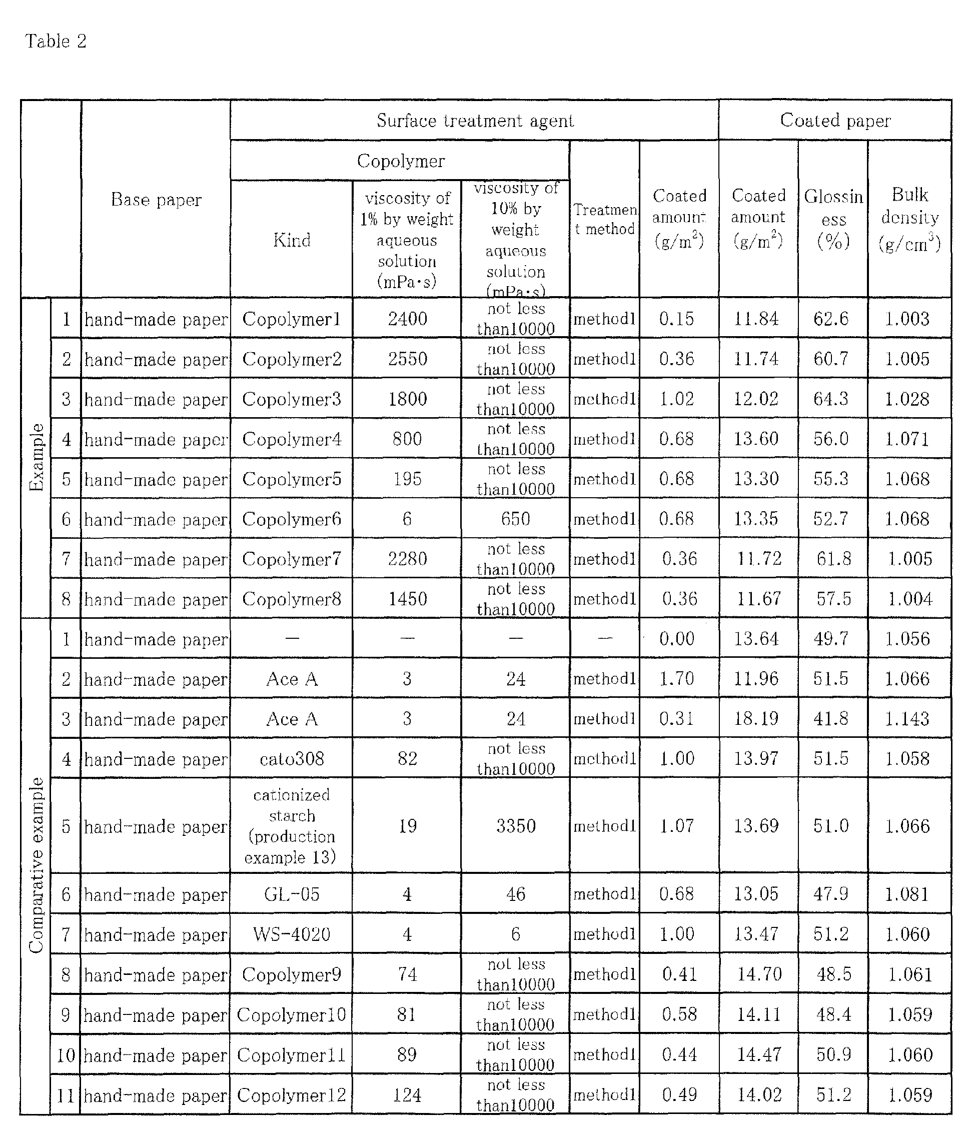

**Table3**

| | | Base paper | Surface treatment agent | | | Coated paper | | |
|---|---|---|---|---|---|---|---|---|
| | | | kind | Treatment method | applied amount (g/m²) | coated amount (g/m²) | glossiness (%) | Bulk density (g/cm³) |
| Example | 9 | Base paper | Copolymer3 | method 1 | 0.41 | 9.08 | 65.1 | 1.045 |
| | 10 | Base paper | Copolymer1 | method 1 | 0.12 (topside) | 9.99 (topside) | 67.3 (topside) | 1.235 |
| | | | Copolymer1 | method 1 | 0.12 (backside) | 9.97 (backside) | 65.4 (backside ) | |
| Comparative example | 12 | Base paper | - | - | 0 | 10.00 | 59.9 | 1.057 |
| | 13 | Base paper | coating agent (1%) | method 1 | 1.02 | 10.77 | 61.1 | 1.078 |
| | 14 | Base paper | Polymaron 482S | method 1 | 1.49 | 12.92 | 57.4 | 1.105 |
| Example | 11 | Base paper | Copolymer 1 | method 2 | 0.42 | 12.77 | 66.0 | 1.093 |
| Comparative example | 15 | Base paper | Ace A | method 2 | 0.42 | 12.86 | 57.9 | 1.098 |

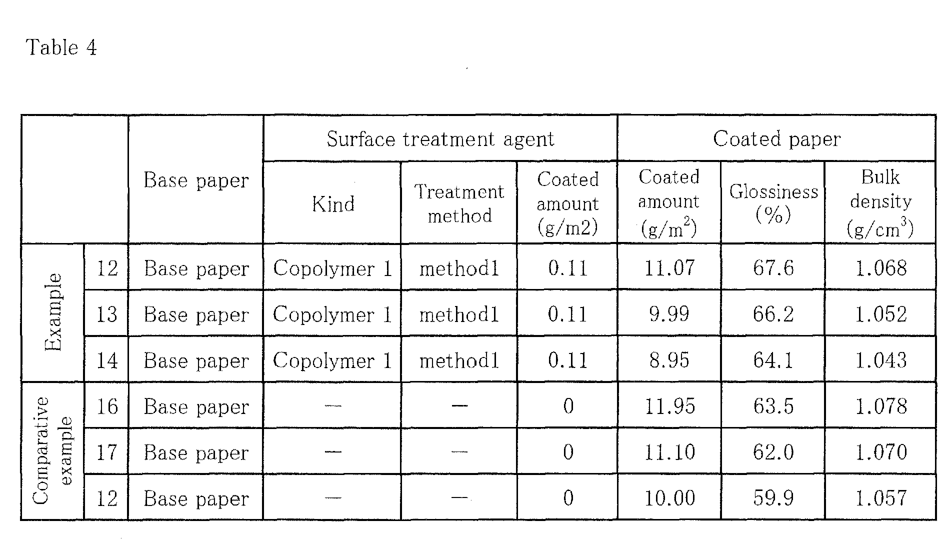

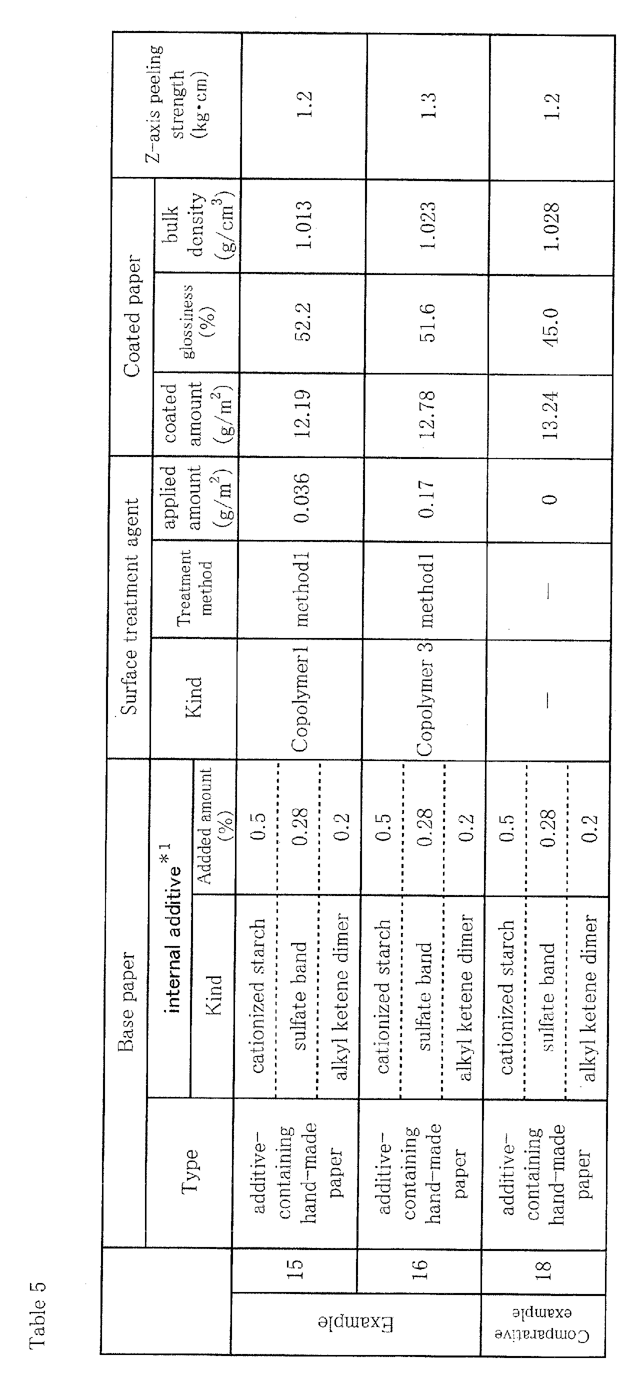

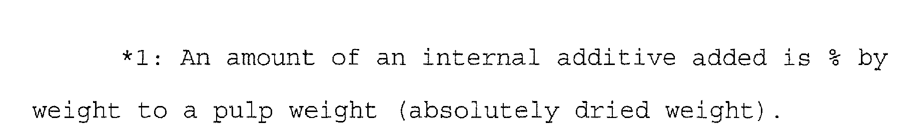

Internal additives used are as follows.
· cationized starch: paper strengthening/paper quality-improving agent, trade name "cato308", Nippon NSC Ltd.
· sulfate band: aluminum sulfate aqueous solution, Kishida Chemical Co., Ltd.
· alkyl ketene dimer: sizing agent, trade name "AD1603", Seiko PMC Corporation

In Table 2, it is clearly shown that Examples 1 to 8 produced by treating the hand-made paper with the surface treatment agent of the present invention have much higher glossiness, compared with Comparative Example 1 not treated with surface treatment agent of the present invention, or untreated paper, Comparative Examples 2 to 7 treated at the surface thereof with agents commonly used for paper, and Comparative Examples 8 to 11 treated with copolymers having a molar ratio of component (A)/component (B) out of the range of the present invention.

In Table 3, it is clearly shown that Example 9 produced by treating the practical machine-made paper with the surface treatment agent of the present invention have much higher glossiness, compared with Comparative Example 12 not treated with surface treatment agent of the present invention, or untreated paper, Comparative Example 13 repeatedly treated with the coating liquid for coating paper, and Comparative Example 14 treated with the surface sizing agent commonly used for paper. It is also shown that Example 11 using the practical machine-made paper and being subjected to the surface treatment with a gate roll coater have much higher glossiness than that of Comparative Example 15 treated with the agent commonly used for paper.

Table 4 shows Examples produced by treating the base paper with the surface treatment agent of the present invention and Comparative Examples not treated with the surface treatment agent, in which the amounts of the coating liquid were changed to compare Example and Comparative Example in view of the same amount of the coating liquid. Table 4 shows amounts of the coating liquid with the same glossiness. Results in Table 4 were plotted on an axis of glossiness against an axis of amount coated to show a relationship thereof (FIG. 1). From Table 4 and FIG. 1, comparison between those coated with the same amount of the coating liquid shows that Examples treated with the surface treatment agent of the present invention had markedly higher glossiness than Comparative Examples not treated, and comparison between those having the same glossiness shows that an amount of the coating liquid can be markedly reduced. The present invention can markedly reduce a coating amount of a coating liquid mainly composed of an inorganic pigment having heavy specific gravity and thus reduce a bulk density of a coated paper, thereby resulting in a lightweight coated paper.

Table 5 is for a hand-made paper containing a common internal additive for paper such as sulfate band, cationized starch, or alkyl ketene dimer. Examples 15 and 16 treated with the surface treatment agent of the present invention were compared with Comparative Example 18 not treated, or untreated paper. Examples according to the present invention showed much higher glossiness than that of and no decreased peeling strength in comparison with Comparative Example.

It is clear that a base paper treated with the surface treatment agent of the present invention provides a coated paper having higher glossiness than a paper produced by a conventional method, or Comparative Examples. It is assumed because, under the same conditions such as a coating amount of a coating liquid containing a pigment and a calendering treatment, through prevention of penetration of the coating liquid, Examples have an effective coated layer contributing to increasing glossiness in a larger amount than Comparative Examples.

## Claims

1. A surface treatment agent for paper, comprising a cationic group-containing copolymer produced by polymerizing (A) at least one selected from the group consisting of vinyl monomers represented by formulae (I) and (II) (hereinafter, referred to as component (A)) and (B) at least one selected from the group consisting of cationic group-containing vinyl monomers represented by formulae (III) and (IV) (hereinafter, referred to as component (B)) at a molar ratio of component (A)/component (B) of 97/3 to 30/70: 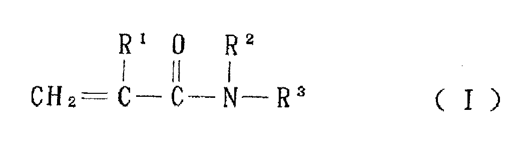 wherein, R¹ represents a hydrogen atom or a methyl group; and R² and R³, which may be the same as or different from each other, each represent a hydrogen atom or a linear or branched alkyl or alkenyl group having 1 to 4 carbon atoms; 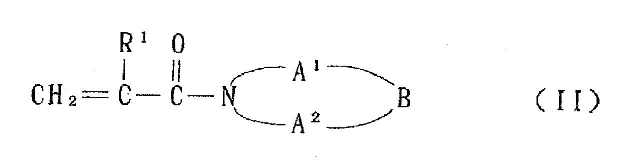 wherein, R¹ represents the same meaning as above; A¹ and A², which may be the same as or different from each other, each represent a group of a formula -(CH₂)ₙ- (n represents an integer of 2 to 6); and B represents a group of -O- or - CH₂-; 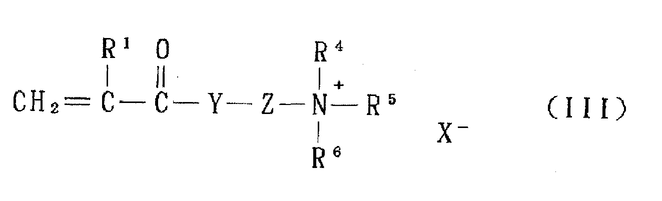 wherein, R¹ represents the same meaning as above; R⁴ and R⁵, which may be the same as or different from each other, each represent an alkyl or alkenyl group having 1 to 4 carbon atoms; R⁶ represents a hydrogen atom or an alkyl group having 1 to 4 carbon atoms; Y represents a group of -O-, - NH-, or -O-CH₂CH(OH)-; Z represents a linear or branched alkylene group having 1 to 4 carbon atoms; and, X represents a conjugate base of the acid, a halogen atom, or an alkylsulfate group having 1 to 4 carbon atoms; 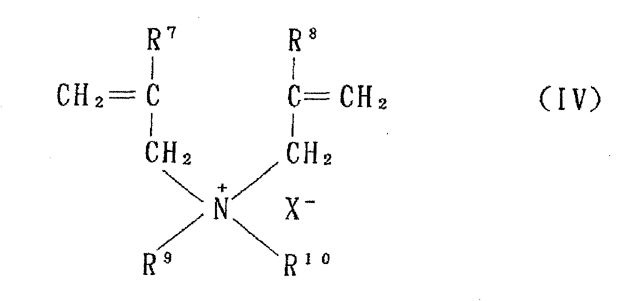 wherein, R⁷ and R⁸, which may be the same as or different from each other, each represent a hydrogen atom or a methyl group; R⁹ and R¹⁰, which may be the same as or different from each other, each represent a hydrogen atom or an alkyl group having 1 to 4 carbon atoms; and, X represents the same meaning as above.

2. The surface treatment agent for paper according to claim 1, wherein the cationic group-containing copolymer is produced by copolymerizing the component (A), the component (B), and further (C) a cross-linking vinyl monomer [excluding the monomer represented by formula (IV)] (hereinafter, referred to as component (C)).

3. The surface treatment agent for paper according to claim 1 or 2, wherein the component (A) is at least one compound selected from the group consisting of (meth)acrylamide, N,N-dimethyl(meth)acrylamide and N,N-diethyl(meth)acrylamide.

4. The surface treatment agent for paper according to claim 2 or 3, wherein an amount of the component (C) in the cationic group-containing copolymer is 0.0005 to 5% by mol of the total amount of the components (A), (B), and (C).

5. A coating base paper, produced by treating a sheet of paper, mainly comprising pulp, with the surface treatment agent for paper according to any of claims 1 to 4 at least on one side in an amount of 0.01 to 3.0 g/m² per side by dry weight.

6. A coated paper, produced by coating the coating base paper according to claim 5 with a coating liquid, mainly comprising a pigment and an adhesive, on the side treated with the surface treatment agent to form a coated layer thereon, wherein the coated paper has a density of not more than 1.5 g/cm³.
